# EUROPEAN PATENT SPECIFICATION

(11) **EP 3 372 475 B1**
(45) Date of publication and mention of the grant of the patent: **25.09.2019**
(21) Application number: 18159527.3
(22) Date of filing: 01.03.2018
(51) Int. Cl.: B62D 3/12, F16H 55/28

(54) **RACK GUIDE DEVICE**
ZAHNSTANGENFÜHRUNGSVORRICHTUNG
DISPOSITIF DE GUIDAGE DE PANIER

(30) Priority: 07.03.2017 JP 2017042925
(43) Date of publication of application: 12.09.2018
(73) Proprietor: JTEKT CORPORATION, Osaka 542-8502 (JP)
(72) Inventor: IKEDA, Tetsuo, Osaka-shi, Osaka 542-8502 (JP); HORIYAMA, Atsushi, Osaka-shi, Osaka 542-8502 (JP)
(74) Representative: Winter, Brandl, Fürniss, Hübner, Röss, Kaiser, Polte - Partnerschaft mbB

(56) References cited:
- EP-A1- 1 914 430
- DE-A1-102009 051 540
- DE-A1-102010 043 805
- US-A1- 2005 116 467

## Description

### BACKGROUND OF THE INVENTION

### 1. Field of the Invention

The present invention relates to a rack guide device.

### 2. Description of the Related Art

In a rack guide device, a rack guide that slidably supports a rack shaft is housed in a housing hole of a housing so as to be slidable between the rack shaft side and the opposite side. A plug is screwed to the inner periphery of an outer opening end portion of the housing hole on the opposite side of the rack shaft. An urging member is housed in a recessed portion formed in at least one of facing surfaces of the plug and the rack guide. The urging member urges the rack guide toward the rack shaft. The clearance between the facing surfaces of the plug and the rack guide is adjusted to a predetermined value of 0.1 mm or less, for example.

In order to prevent slipping of the plug, the following methods which use clinching are normally used. For example, in a first method, a plastically deformed portion is first formed by clinching on a part of ridges of external threads of the plug. The clearance between the plug and the rack guide is adjusted to a predetermined value by tightening the plug which is provided with the plastically deformed portion until the plug abuts against the rack guide, and thereafter unscrewing the plug by a predetermined amount. The first method is also referred to as a "pre-clinching method" since clinching is performed before the clearance is adjusted.

In a second method, the clearance is adjusted to a predetermined value by tightening the plug until the plug abuts against the rack guide, and thereafter unscrewing the plug by a predetermined amount. After that, an end surface of the plug is clinched to the housing. The second method is also referred to as a "post-clinching method" since clinching is performed after the clearance is adjusted. As a common technique of preventing loosening of a screw, Japanese Patent Application Publication No. 2011-12784 (JP 2011-12784 A) proposes a technique of forming a plastically deformed external thread portion by forming an external thread portion of a bolt, for example, by form rolling or cutting and thereafter plastically deforming at least some of ridges of the external thread portion to displace a crest portion of the ridges in the radial direction and/or the axial direction of the external threads. In JP 2011-12784 A, a projection material is projected onto the ridges, high-pressure water is jetted toward the ridges, or a pressing instrument is pressed against the bolt in the screwed state in a plastic deformation step in which the ridges are plastically deformed.

The clinching steps of the first method, the second method, etc. and the plastic deformation step of JP 2011-12784 A in which the crest portion of the ridges is displaced involve complicated work, and do not facilitate manufacture.

Document DE 10 2009 051 540 A1 discloses a rack guide device for vehicle comprising a housing and a rack guide. Document DE 10 2010 043 805 A1 discloses a rack guide device with the feature of the preamble of claim 1.

### SUMMARY OF THE INVENTION

It is an object of the present invention to provide a rack guide device that facilitates manufacture.

The present invention provides a rack guide device including: a housing in which a housing hole is formed; a rack guide housed in the housing hole so as to be movable in a first direction toward a rack shaft and a second direction that is opposite to the first direction, the rack guide supporting the rack shaft so as to be slidable in an axial direction; a plug screwed to an outer opening end portion that is an end portion of the housing hole on a side in the second direction; and an urging member interposed between the plug and the rack guide to urge the rack guide in the first direction, in which: an outer peripheral surface of the plug includes external threads screwed to internal threads formed in an inner peripheral surface of the housing hole at the outer opening end portion; and a root portion of the external threads includes an interference portion that interferes with a crest portion of the internal threads.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic view illustrating a schematic configuration of a steering device to which a rack guide device is applied according to a first embodiment of the present invention;
FIG. 2 is a sectional view of an essential portion of the steering device which includes the rack guide device according to the first embodiment;
FIG. 3 is a schematic perspective view of a plug according to the first embodiment;
FIG. 4A is a schematic sectional view of the plug according to the first embodiment;
FIG. 4B is a schematic sectional view of a portion around an outer opening end portion of a housing hole of a housing according to the first embodiment;
FIG. 4C is a schematic sectional view of external threads of the plug and internal threads of the outer opening end portion, which are fitted with each other, according to the first embodiment; and
FIG. 5 is a schematic sectional view of a plug applied to a rack guide device according to a second embodiment of the present invention.

### DETAILED DESCRIPTION OF EMBODIMENTS

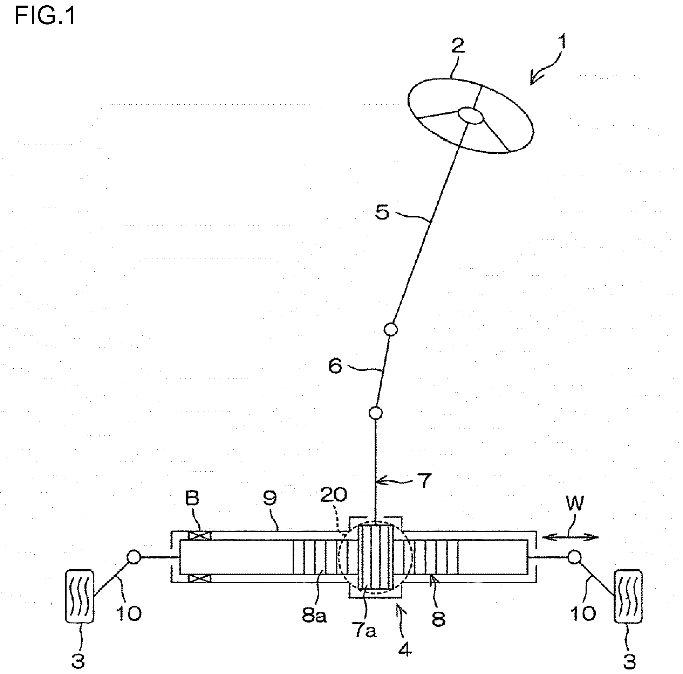

An embodiment of the present invention will be described below with reference to the accompanying drawings. FIG. 1 is a schematic view illustrating a schematic configuration of a steering device 1 to which a rack guide device 20 is applied according to a first embodiment of the present invention. With reference to FIG. 1, the steering device 1 includes a steering member 2 such as a steering wheel that is rotationally operable, and a steering operation mechanism 4 that steers steered wheels 3 in conjunction with rotation of the steering member 2. The steering device 1 includes a steering shaft 5, to one end of which the steering member 2 is attached, and an intermediate shaft 6.

The steering operation mechanism 4 is constituted of a rack-and-pinion mechanism, for example. The steering operation mechanism 4 includes a pinion shaft 7 and a rack shaft 8 that serves as a steered shaft. The pinion shaft 7 is coupled to the steering shaft 5 via the intermediate shaft 6. A pinion 7a is formed in the vicinity of an end portion of the pinion shaft 7. A rack 8a to be meshed with the pinion 7a of the pinion shaft 7 is formed on the outer periphery of a part of the rack shaft 8 in an axial direction W.

The rack shaft 8 is supported in a rack housing 9, which is fixed to a vehicle body, via a rack bushing B etc. so as to be movable in the axial direction W (corresponding to the vehicle width direction which is the right-left direction of the vehicle body). End portions of the rack shaft 8 project to both sides from the corresponding end portions of the rack housing 9. The end portions of the rack shaft 8 are coupled to the corresponding steered wheels 3 via corresponding tie rods 10 and corresponding knuckle arms (not illustrated).

When the steering member 2 is rotationally operated to rotate the steering shaft 5, rotation of the steering shaft 5 is converted into linear motion of the rack shaft 8 in the axial direction W by the pinion 7a and the rack 8a. Consequently, the steered wheels 3 are steered. The steering device 1 includes the rack guide device 20. The rack guide device 20 is disposed on the opposite side of the rack shaft 8 from the pinion 7a. The rack guide device 20 functions to guide movement of the rack shaft 8 in the axial direction W while urging the rack shaft 8 toward the pinion 7a.

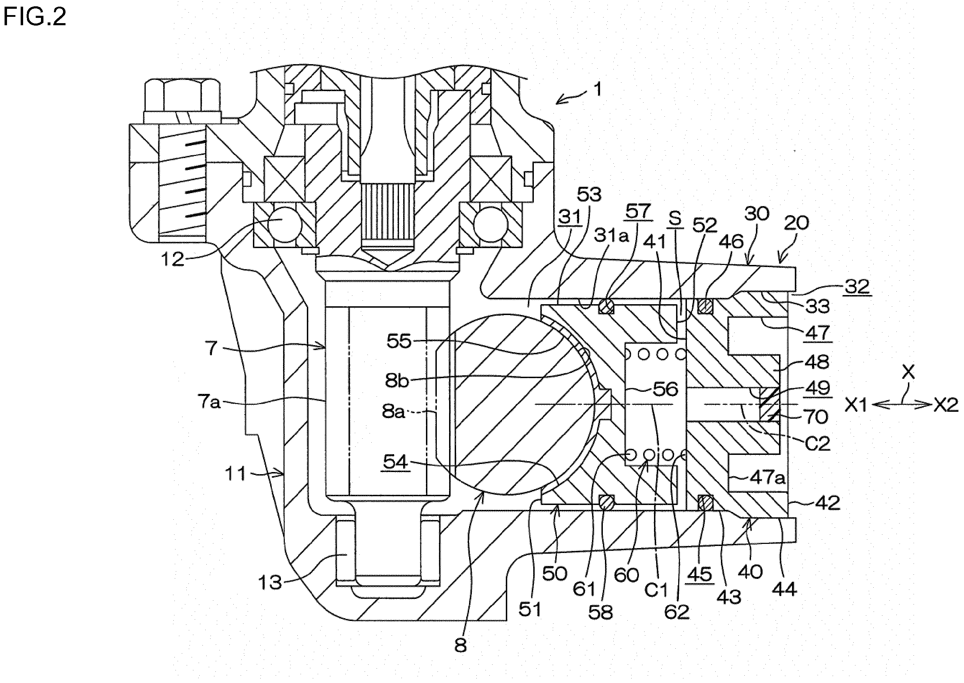

FIG. 2 is a sectional view of an essential portion of the steering device 1. As illustrated in FIG. 2, the steering device 1 includes a pinion housing 11, a first bearing 12, and a second bearing 13. The pinion housing 11 is attached integrally to the rack housing 9 (see FIG. 1). As illustrated in FIG. 2, the first bearing 12 and the second bearing 13 are held by the pinion housing 11, and rotatably support the pinion shaft 7 in the pinion housing 11. The first bearing 12 and the second bearing 13 are disposed on the pinion shaft 7 on opposite sides of the pinion 7a. The second bearing 13 is disposed on a distal end of the pinion shaft 7. The first bearing 12 is constituted of a ball bearing, for example. The second bearing 13 is constituted of a cylindrical roller bearing, for example. The pinion 7a of the pinion shaft 7 and the rack 8a of the rack shaft 8 are meshed with each other in the pinion housing 11.

The rack guide device 20 includes a housing 30, a plug 40, a rack guide 50, an urging member 60, and a plug member 70. The housing 30 is provided integrally with the pinion housing 11. The housing 30 is disposed on the opposite side of the rack shaft 8 from the pinion 7a. A housing hole 31 constituted of a circular hole, for example, is formed in the housing 30. The rack shaft 8 is inserted through the housing hole 31.

An outer opening end portion 32 is formed in the housing hole 31 on the opposite side of the rack shaft 8. The plug 40 is screwed to the outer opening end portion 32 of the housing hole 31. Internal threads 33 are formed in an inner peripheral surface 31a of the housing hole 31 at the outer opening end portion 32. External threads 44 to be screwed to the internal threads 33 are formed on an outer peripheral surface 43 of the plug 40. The rack guide 50 is housed in the housing hole 31 so as to be movable (advanceable/retractable) in a first direction X1 (advancing direction) toward the rack shaft 8 and a second direction X2 (retracting direction) toward the plug 40 which is opposite to the first direction X1. In the following, the first direction X1 and the second direction X2 are collectively referred to as an "advancing/retracting direction X". The rack guide 50 slidably supports a back surface 8b of the rack 8a of the rack shaft 8.

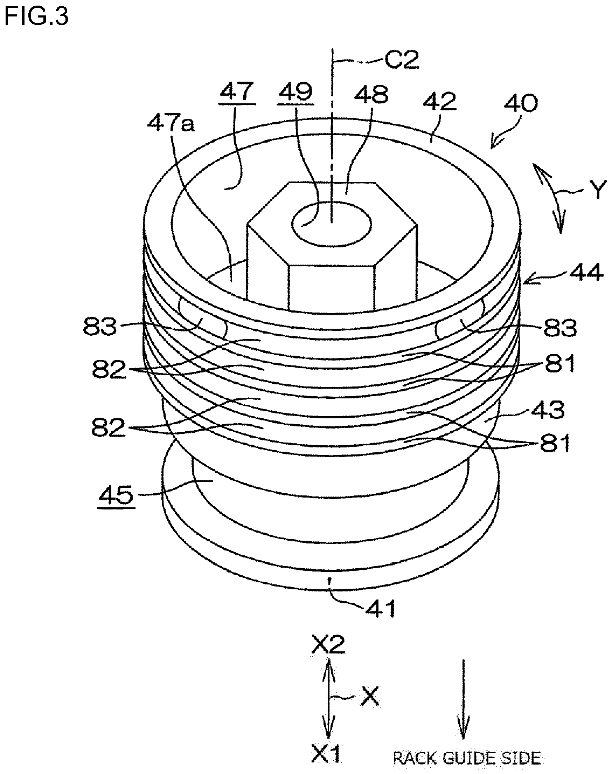

FIG. 3 is a schematic perspective view of the plug 40. As illustrated in FIGS. 2 and 3, the plug 40 includes a first end surface 41 on the first direction X1 side, a second end surface 42 on the second direction X2 side, and the outer peripheral surface 43. The outer peripheral surface 43 is a cylindrical surface centered on a center axis C2 of the plug 40. As illustrated in FIG. 2, the first end surface 41 faces the rack guide 50. As illustrated in FIGS. 2 and 3, the outer peripheral surface 43 of the plug 40 is formed with the external threads 44 and an outer peripheral groove 45. The outer peripheral groove 45 is disposed on the rack guide 50 side with respect to the external threads 44.

As illustrated in FIG. 2, a seal member 46 is housed in the outer peripheral groove 45. The seal member 46 is constituted of an annular elastic member such as an O-ring. The seal member 46 functions to seal a space between the outer peripheral surface 43 of the plug 40 and the inner peripheral surface 31a of the housing hole 31. The external threads 44 of the plug 40 are screwed into the internal threads 33 of the inner peripheral surface 31a of the housing hole 31 at the outer opening end portion 32 so that the plug 40 is held by the housing 30 by a predetermined holding force. The plug 40 is a cast article. The external threads 44 are formed when the plug 40 is cast.

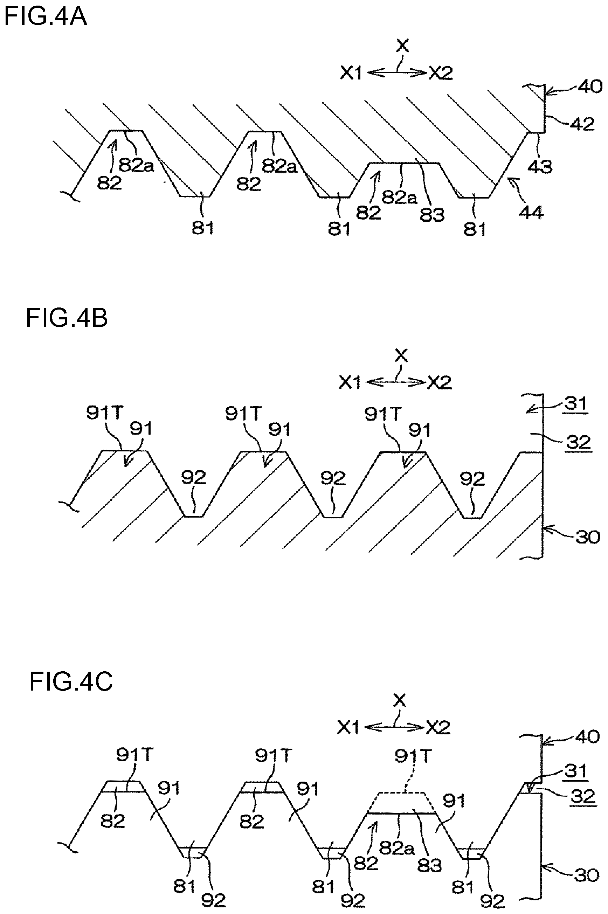

FIG. 4A is a schematic sectional view of the plug 40. FIG. 4B is a schematic sectional view of a portion around the outer opening end portion 32 of the housing hole 31 of the housing 30. FIG. 4C is a schematic sectional view of the external threads 44 of the plug 40 and the internal threads 33 of the outer opening end portion 32, which are fitted with each other. As illustrated in FIGS. 3 and 4A, the external threads 44 have ridge portions 81 and root portions 82. As illustrated in FIG. 4B, the internal threads 33 have ridge portions 91 and root portions 92. The crest portions of the ridge portions 91 constitute crest portions 91T.

As illustrated in FIG. 4A, interference portions 83 are provided at a root 82a of the root portion 82 of the external threads 44. As illustrated in FIG. 3, a plurality of interference portions 83 are provided, and disposed at equal intervals in a circumferential direction Y of the outer peripheral surface 43 of the plug 40. As illustrated in FIG. 4C, the interference portions 83 of the root portion 82 of the external threads 44 of the plug 40 interfere with the crest portion 91T of the internal threads 33 with the external threads 44 and the internal threads 33 fitted with each other. This interference increases the frictional resistance. Therefore, torque required to rotate the plug 40 is increased. In other words, a holding force for holding the rotational position of the plug 40 is increased, which prevents slipping of the plug 40. The interference portions 83 and the crest portion 91T of the internal threads 33 which interferes with the interference portions 83 are elastically deformed by the interference.

As illustrated in FIGS. 2 and 3, a recessed portion 47 is formed in the second end surface 42 of the plug 40. A tool engagement projection 48 is formed to project from a root portion 47a of the recessed portion 47. The tool engagement projection 48 is formed to have a polygonal cross-sectional surface, for example, such that a tool for screwing the plug 40 from the outer opening end portion 32 side is externally fitted with the tool engagement projection 48. The tool engagement projection 48 is formed with a through hole 49 that penetrates the tool engagement projection 48 in the direction of the axis of the plug 40. As illustrated in FIG. 2, the plug member 70 is press-fitted into the through hole 49 to seal the through hole 49. A dial gauge (not illustrated) for measuring variations in position of the rack guide 50 in the advancing/retracting direction X is inserted through the through hole 49 during assembly of the rack guide device 20.

The rack guide 50 includes a first end surface 51 on the first direction X1 side, a second end surface 52 on the second direction X2 side, and an outer peripheral surface 53. The first end surface 51 faces the rack shaft 8. A recessed surface 54 shaped so as to generally coincide with the shape of the back surface 8b of the rack shaft 8 is formed in the first end surface 51 of the rack guide 50. A sliding contact plate 55 that has a curved shape along the recessed surface 54 is fixed to the recessed surface 54. The sliding contact plate 55 is in sliding contact with the back surface 8b of the rack shaft 8. A plate with a small friction coefficient is preferably used as the sliding contact plate 55. A metal plate or a metal plate coated with a fluorine resin, for example, can be used as the sliding contact plate 55.

The outer peripheral surface 53 of the rack guide 50 is constituted of a cylindrical surface centered on a center axis C1 of the rack guide 50. A recessed portion 56 constituted of a circular hole that is concentric with the cylindrical surface of the outer peripheral surface 53 is formed in the second end surface 52 of the rack guide 50. The urging member 60 is a compression coil spring interposed between the root of the recessed portion 56 of the second end surface 52 of the rack guide 50 and the first end surface 41 of the plug 40. The urging member 60 includes a first end portion 61 received by the root of the recessed portion 56 of the rack guide 50, and a second end portion 62 received by the first end surface 41 of the plug 40. The urging member 60 urges the rack guide 50 toward the first direction X1 side (toward the rack shaft 8).

An outer peripheral groove 57 is formed in the outer peripheral surface 53 of the rack guide 50. An annular elastic member 58 such as an O-ring, for example, is housed and held in the outer peripheral groove 57. The outside diameter of the rack guide 50 is slightly smaller than the bore diameter of the housing hole 31. The elastic member 58 slides on an inner peripheral surface 31a of the housing hole 31. Consequently, the rack guide 50 is moved in the advancing/retracting direction X in the housing hole 31.

In the present embodiment, during assembly, the plug 40 is screwed into the outer opening end portion 32 of the housing hole 31 of the housing 30, the plug 40 (the first end surface 41 thereof) abuts against the rack guide 50 (the second end surface 52 thereof), and thereafter the plug 40 is unscrewed by a predetermined amount. Consequently, a clearance S (see FIG. 2) between the plug 40 (the first end surface 41 thereof) and the rack guide 50 (the second end surface 52 thereof) is set to a predetermined amount. In this event, as illustrated in FIG. 4C, the interference portions 83 of the plug 40 interfere with the crest portion 91T of the internal threads 33, preventing loosening of the plug 40. Consequently, it is not necessary to clinch the plug 40 in order to prevent such loosening, which facilitates manufacture of the rack guide device 20.

The plug 40 is a cast article. Therefore, the interference portions 83 are formed on the root 82a of the root portion 82 of the external threads 44 at the same time as the plug 40 is cast, which facilitates manufacture. The interference portions 83 can be formed by cutting away a crest portion of a root portion forming projecting portion (not illustrated), for forming the root portion 82 of the external threads 44, of a casting die for casting a plug for a case where the interference portions 83 are not formed. Manufacture is facilitated also from this point of view.

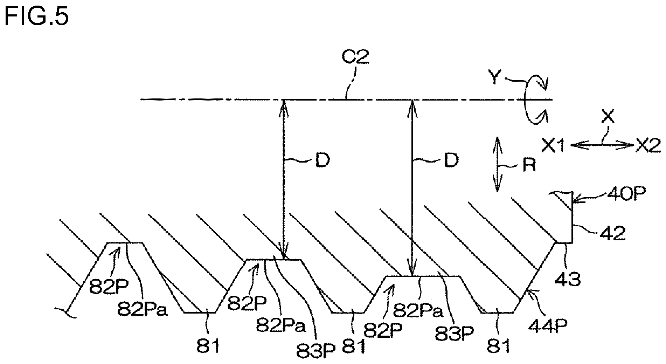

A plurality of interference portions 83 are disposed at equal intervals in the circumferential direction Y of the outer peripheral surface 43 of the plug 40. Therefore, the plug 40 is not easily decentered with respect to the internal threads 33, which allows the plug 40 to be screwed and unscrewed stably. FIG. 5 is a schematic sectional view of a plug 40P of a rack guide device according to a second embodiment of the present invention. As illustrated in FIG. 5, interference portions 83P are provided at roots 82Pa of root portions 82P of external threads 44P of the plug 40P. A distance D between the center axis C2 of the plug 40P and the interference portion 83P in a radial direction R of the plug 40P is varied in accordance with the position in the circumferential direction Y of the plug 40P. Specifically, the distance D is gradually increased or gradually decreased toward one side in the circumferential direction Y.

In the present embodiment, the amount of interference (in the radial direction R) of the interference portion 83P with the crest portion 91T (not illustrated) of the internal threads 33 is gradually increased or gradually decreased in accordance with the position in the circumferential direction Y of the outer peripheral surface 43 of the plug 40P. Therefore, a force required for screwing work and unscrewing work is gradually increased or gradually decreased, which facilitates work. The present invention is not limited to the embodiments described above. For example, the plug may be a forged article, and the external threads of the plug may be a cut portion. Besides that, the present invention may be modified in various ways without departing from the scope of the claims.

## Claims

1. A rack guide device for a steering system comprising:
a housing (11) in which a housing hole (31) is formed;
a rack guide (50) housed in the housing hole (31) so as to be movable in a first direction toward a rack shaft (8) and a second direction that is opposite to the first direction, the rack guide (50) supporting the rack shaft (8) so as to be slidable in an axial direction;
a plug (40) screwed to an outer opening end portion (32) that is an end portion of the housing hole (31) on a side in the second direction; and
an urging member (60) interposed between the plug (40) and the rack guide (50) to urge the rack guide (50) in the first direction, wherein:
an outer peripheral surface of the plug (40) includes external threads screwed to internal threads formed in an inner peripheral surface of the housing hole (31) at the outer opening end portion (32); **characterized by**
a root portion (82) of the external threads includes an interference portion (83) that interferes with a crest portion (91T) of the internal threads.

2. The rack guide device according to claim 1, wherein
the plug (40) is a cast article.

3. The rack guide device according to claim 1 or 2, wherein
a plurality of interference portions (83) are provided, and disposed at equal intervals in a circumferential direction of the outer peripheral surface of the plug (40).

4. The rack guide device according to any one of claims 1 to 3, wherein
a distance between a center axis of the plug (40) and the interference portion (83) in a radial direction of the plug (40) is varied in accordance with a position in a circumferential direction of the outer peripheral surface of the plug (40).

## Patentansprüche

1. Zahnstangenführungsvorrichtung für ein Lenksystem mit
einem Gehäuse (11), in dem ein Gehäuseloch (31) ausgebildet ist;
einer Zahnstangenführung (50), die in dem Gehäuseloch (31) so untergebracht ist, dass sie in einer ersten Richtung zu einer Zahnstangenwelle (8) hinzu und in einer zweiten Richtung, die der ersten Richtung entgegengesetzt ist, beweglich ist, wobei die Zahnstangenführung (50) die Zahnstangenwelle (8) so unterstützt, dass sie in axialer Richtung verschiebbar ist;
einem Stopfen (40), der an einen äußeren Öffnungsendabschnitt (32) verschraubt ist, der ein Endabschnitt des Gehäuselochs (31) an einer Seite in der zweiten Richtung ist; und
einem Druckelement (60), das zwischen dem Stopfen (40) und der Zahnstangenführung (50) angeordnet ist, um die Zahnstangenführung (50) in die erste Richtung zu drücken, wobei
eine Außenumfangsfläche des Stopfens (40) ein Außengewinde umfasst, das mit einem Innengewinde verschraubt ist, das in einer Innenumfangsfläche des Gehäuselochs (31) am äußeren Öffnungsendabschnitt (32) ausgebildet ist; **dadurch gekennzeichnet, dass**
ein Fußabschnitt (82) des Außengewindes einen Beeinträchtigungsabschnitt (83) enthält, der einen Scheitelabschnitt (91T) des Innengewindes beeinträchtigt.

2. Zahnstangenführungsvorrichtung nach Anspruch 1, wobei
der Stopfen (40) ein Gussgegenstand ist.

3. Zahnstangenführungsvorrichtung nach Anspruch 1 oder 2, wobei
eine Vielzahl von Beeinträchtigungsabschnitten (83) vorgesehen sind und in gleichen Abständen in Umfangsrichtung der Außenumfangsfläche des Stopfens (40) angeordnet sind.

4. Zahnstangenführungsvorrichtung nach einem der Ansprüche 1 bis 3, wobei
ein Abstand zwischen einer Mittelachse des Stopfens (40) und dem Beeinträchtigungsabschnitt (83) in radialer Richtung des Stopfens (40) in Übereinstimmung mit einer Position in Umfangsrichtung der Außenumfangsfläche des Stopfens (40) variiert wird.

## Revendications

1. Dispositif de guidage de crémaillère pour un système de direction comprenant :
un carter (11) dans lequel un trou de carter (31) est formé ;
un guide de crémaillère (50) logé dans le trou de carter (31) de façon à être mobile dans une première direction vers un arbre de crémaillère (8) et une seconde direction qui est opposée à la première direction, le guide de crémaillère (50) supportant l'arbre de crémaillère (8) de façon à pouvoir coulisser dans une direction axiale ;
un bouchon (40) vissé sur une partie d'extrémité d'ouverture extérieure (32) qui est une partie d'extrémité du trou de carter (31) sur un côté dans la seconde direction ; et
un élément de poussée (60) intercalé entre le bouchon (40) et le guide de crémaillère (50) pour pousser le guide de crémaillère (50) dans la première direction ; dans lequel :
une surface périphérique extérieure du bouchon (40) inclut des filets extérieurs vissés sur des filets intérieurs formés dans une surface périphérique intérieure du trou de carter (31) au niveau de la partie d'extrémité d'ouverture extérieure (32) ; **caractérisé par**
une partie de base (82) des filets extérieurs inclut une partie d'interférence (83) qui interfère avec une partie de crête (91T) des filets intérieurs.

2. Dispositif de guidage de crémaillère selon la revendication 1, dans lequel
le bouchon (40) est un article coulé.

3. Dispositif de guidage de crémaillère selon la revendication 1 ou 2, dans lequel
une pluralité de parties d'interférences (83) sont fournies, et disposées à intervalles égaux dans une direction circonférentielle de la surface périphérique extérieure du bouchon (40).

4. Dispositif de guidage de crémaillère selon l'une quelconque des revendications 1 à 3, dans lequel
une distance entre un axe central du bouchon (40) et la partie d'interférence (83) dans une direction radiale du bouchon (40) est variée selon une position dans une direction circonférentielle de la surface périphérique extérieure du bouchon (40).
